# EUROPÄISCHE PATENTSCHRIFT

(11) **EP 3 817 944 B1**
(45) Veröffentlichungstag und Bekanntmachung des Hinweises auf die Patenterteilung: **26.10.2022**
(21) Anmeldenummer: 19778853.2
(22) Anmeldetag: 16.09.2019
(51) Int. Cl.: B60L 5/10, B60L 5/24, B60L 9/00, B62D 15/02, B60L 5/04

(54) **NICHT SPURGEBUNDENES, ELEKTRISCH ANGETRIEBENES FAHRZEUG**
NON TRACK-BOUND, ELECTRICALLY DRIVEN VEHICLE
VÉHICULE NON GUIDÉ, À ENTRAÎNEMENT ÉLECTRIQUE

(30) Priorität: 19.09.2018 DE 102018215941
(43) Veröffentlichungstag der Anmeldung: 12.05.2021
(73) Patentinhaber: Siemens Mobility GmbH, 81739 München (DE)
(72) Erfinder: BLASE, Bastian, 13187 Berlin (DE); DRONNIK, Andrej, 12489 Berlin (DE); EVERSBERG, Leon, 14059 Berlin (DE); JAKOBI, Steffen, 12524 Berlin (DE); SÄNGER, Göran, 12587 Berlin (DE)
(86) Internationale Anmeldenummer: PCT/EP2019/074702
(87) Internationale Veröffentlichungsnummer: WO 2020/058190

(56) Entgegenhaltungen:
- EP-A1- 0 363 623
- EP-A2- 1 710 116
- EP-A2- 2 165 917
- DE-A1-102011 076 615
- DE-A1-102017 215 340
- US-A1- 2014 041 951

## Beschreibung

Die Erfindung bezieht sich auf ein nicht spurgebundenes, elektrisch angetriebenes Fahrzeug nach dem Oberbegriff des Patentanspruches 1.

Die Offenlegungsschrift DE 10 2011 076 615 A1 offenbart ein nicht schienengebundenes Fahrzeug, insbesondere Lastkraftwagen oder Bus, mit einem Stromabnehmer zur Einspeisung elektrischer Energie aus einer zwei Fahrdrähte aufweisenden Oberleitungsanlage. Der Stromabnehmer weist für jeden der Fahrdrähte mindestens eine Schleifleiste mit einem Arbeitsbereich zur Kontaktierung des zugeordneten Fahrdrahtes auf. Mit dem Stromabnehmer sind Aktormittel zum Verstellen der mindestens einen Schleifleiste gekoppelt. Die Schleifleisten sind waagerecht ausgerichtet und quer zu einer Fahrzeuglängsachse verstellbar. Sensormittel sind zur Erfassung der Lage des Fahrzeuges relativ zum wenigstens einen Fahrdraht vorgesehen. Die Sensormittel weisen zwei in einem Querabstand voneinander angeordnete Messgeräte zur Feldstärkebestimmung auf, wobei der Querabstand verschieden vom Abstand zwischen den Fahrdrähten ist. Die Sensormittel weisen wenigstens Die Messgeräte bestimmen die Feldstärke eines von den Fahrdrähten erzeugten physikalischen Feldes, insbesondere eines magnetischen Feldes oder eines elektrischen Feldes oder eines elektromagnetischen Wechselfeldes. Eine mit den Sensormitteln und den Aktormitteln verbundene Steuereinrichtung ist dazu ausgebildet, die Aktormittel in Abhängigkeit der von den Sensormitteln erfassten Fahrzeuglage derart anzusteuern, dass die mindestens eine Schleifleiste den Kontakt zum wenigstens einen Fahrdraht innerhalb ihres Arbeitsbereiches hält. Die Steuereinrichtung ist mit einem Fahrerassistenzsystem verbunden, durch welches in Abhängigkeit der bestimmten Aktorstellung und/oder der erfassten Fahrzeuglage ein automatischer Lenkeingriff vorgenommen werden kann.

Aus der europäischen Patentanmeldung EP 1 710 116 A2 ist eine Vorrichtung zum Bestimmen der Position eines Fahrdrahtes einer Eisenbahn-Oberleitungsanlage in Bezug auf die Mitte einer Schleifleiste eines Stromabnehmers eines Eisenbahnfahrzeugs bekannt. Die Vorrichtung umfasst erste und zweite Mittel, die geeignet sind, eine Kraft zu erfassen, die jeweils auf die Enden der Schleifleiste wirkt. Die ersten und zweiten Mittel sind jeweils am ersten und zweiten Ende der Schleifleiste angeordnet. Die Vorrichtung umfasst ferner Verarbeitungsmittel, die geeignet sind, aus den erfassten Kräften die Position des Fahrdrahtes in Bezug auf die Mitte der Schleifleiste zu berechnen. Die ersten und zweiten Mittel umfassen Kraftmessdosen.

Ein gattungsgemäßes, als Lastkraftwagen oder Bus ausgebildetes Fahrzeug ist aus der Offenlegungsschrift DE 10 2012 205 276 A1 bekannt. Es umfasst einen Stromabnehmer zur Einspeisung elektrischer Energie aus einer entlang einer Fahrspur angeordneten, zweipoligen Oberleitungsanlage mit als Hin- und Rückleiter ausgebildeten Fahrdrähten. Der Stromabnehmer weist je Fahrdraht mindestens eine Schleifleiste mit einem Arbeitsbereich zur Kontaktierung der Fahrdrähte auf. Das Fahrzeug umfasst außerdem Erfassungsmittel zur direkten und indirekten Erfassung der Relativlage des Stromabnehmers zu den Fahrdrähten. Des Weiteren umfasst das Fahrzeug ein Lenkassistenzsystem zur automatischen Lenkung des Fahrzeugs in Abhängigkeit der erfassten Relativlage.

Die Erfassungsmittel dieses bekannten Fahrzeugs weisen ein Positionsbestimmungssystem zur Bestimmung einer aktuellen Fahrzeugposition des Fahrzeugs auf der Fahrspur und eine Datenbank mit gespeicherten Fahrdrahtpositionen der Fahrdrähte entlang der Fahrspur auf. Die Erfassungsmittel sind dazu ausgebildet, die Relativlage aus der aktuell bestimmten Fahrzeugposition und aus den zugeordneten Fahrdrahtpositionen zu berechnen. Bei dieser indirekten Erfassung der Relativlage bestehen Ungenauigkeiten in den gespeicherten Fahrdrahtpositionen vor allem durch Seitenwindeinflüsse. Außerdem ist eine aufwändige Schnittstelle zum Positionsbestimmungssystem des Fahrzeugs. Beruht das Positionsbestimmungssystem auf einer optischen Messung, etwa durch eine Videokamera, bestehen auch witterungsbedingte Messprobleme bei Niederschlägen.

Die Erfassungsmittel dieses Fahrzeugs weisen auch Kontaktpositionssensoren zur Bestimmung der aktuellen Kontaktpositionen der Fahrdrähte an den Schleifleisten auf. Dabei sind die Erfassungsmittel dazu ausgebildet, aus den bestimmten Kontaktpositionen die aktuelle Relativlage des Fahrzeugs zu den Fahrdrähten zu ermitteln. Bei dieser direkten Erfassung der Relativlage kommen beispielsweise optische Sensoren, wie zum Beispiel Laserscanner, zum Einsatz, die die Position der Fahrdrähte mittels Laserstrahlung abtasten. Aus der Anordnung der Sensoren am Fahrzeug kann jeweils auf die Relativlage der Fahrdrähte zum Fahrzeug geschlossen werden. Laserscanner sind aber vergleichsweise teuer und erfordern leistungsfähige Rechner und eine aufwändige Software zur Auswertung der Messergebnisse. Es kommt hierbei auch zu witterungsbedingten Störungen bei Nebel, Schnee und starkem Regen.

Fehlt die Information über die aktuelle Seitenlage des Kontaktpunktes zwischen Fahrdraht und Schleifleiste, muss der Stromabnehmer aus Sicherheitsgründen abgesenkt werden und steht damit zur Energieeinspeisung nicht zur Verfügung.

Der Erfindung liegt daher die Aufgabe zugrunde, ein gattungsgemäßes Fahrzeug mit erhöhter Verfügbarkeit für eine elektrische Energieeinspeisung aus einer Oberleitungsanlage bereitzustellen.

Die Aufgabe wird erfindungsgemäß gelöst durch ein Fahrzeug mit den im Patentanspruch 1 angegebenen Markmalen. Demnach umfasst ein nicht spurgebundenes, elektrisch angetriebenes Fahrzeug einen Stromabnehmer zur Einspeisung von elektrischer Energie aus einer zweipoligen Oberleitungsanlage. Der Stromabnehmer weist ein gelenkiges Traggestänge auf, dass fahrdrahtseitig eine Kontaktwippe mit einer Schleifleiste trägt und das fahrzeugseitig mit einem Hubantrieb zum Aufstellen des Traggestänges und zum Andrücken der Kontaktwippe an einen Fahrdraht der Oberleitungsanlage gekoppelt ist. Das Fahrzeug umfasst ferner eine Erfassungseinrichtung zur Erfassung der Seitenlage eines Kontaktpunktes des Fahrdrahtes auf der Schleifleiste. Außerdem umfasst das Fahrzeug ein Fahrerassistenzsystem zur Ausführung eines automatischen Lenkeingriffs in Anhängigkeit von der erfassten Seitenlage des Kontaktpunktes.

Der Stromabnehmer kann zwei in Fahrzeuglängsrichtung nebeneinander angeordnete Kontaktwippen aufweisen, die jeweils einen von zwei Fahrdrähten der zweipoligen Oberleitungsanlage kontaktieren. Jede Kontaktwippe kann in Fahrzeuglängsrichtung zwei hintereinander angeordnete, parallel zueinander verlaufende, längliche Schleifleisten aufweisen. Was nachfolgend für eine Schleifleisten und einen Fahrdraht beschrieben ist, kann für mehrere oder jede einer Mehrzahl an Schleifleisten zutreffen.

Erfindungsgemäß ist die Schleifleiste über mindestens zwei Federelemente an der Kontaktwippe abgestützt, wobei die Erfassungseinrichtung zwei Wegsensoren zur Messung von Einfederwegen der Federelemente und eine mit den Wegsensoren verbundene Auswertungseinheit zur Ermittlung der Seitenlage des Kontaktpunktes aus den gemessene Einfederwege repräsentierenden Sensorsignalen aufweist. Die Federelemente, beispielsweise als Blattfedern ausgebildet, haben eine bekannte Federkonstante, so dass aus den Einfederwegen auf die auf die Federelemente wirkenden Kräfte geschlossen werden kann. Abhängig davon, in welchem Abstandsverhältnis der Fahrdraht die Schleifleiste zwischen den beiden Federelementen kontaktiert, ergibt sich ein eindeutiges Kräfteverhältnis an den Federelementen, was wiederum einem eindeutigen Verhältnis der Einfederwege beziehungsweise der diese repräsentierenden Sensorsignale entspricht. Es gilt, dass der Einfederweg eines Federelements proportional zum Quotienten aus dem Abstand zwischen Kontaktpunkt und dem anderen Federelement und dem Abstand zwischen den beiden Federelementen ist. Ein solches eindeutiges, die Seitenlage des Kontaktpunktes repräsentierendes Signal kann über den Datenbus des Fahrzeugs von der Auswertungseinheit an das Fahrerassistenzsystem übergeben werden. Durch eine kontinuierliche Erfassung der Seitenlage kann ein drohendes Abgleiten des Fahrdrahtes von der Schleifleiste frühzeitig erkannt werden, wodurch ein frühzeitiges und damit sanftes Gegenlenken durch das Fahrerassistenzsystem erfolgen kann. Dadurch werden Sprünge oder ruckartigen Bewegungen durch plötzliches Gegenlenken vermieden. Die Verfügbarkeit der Energieeinspeisung aus der Oberleitung durch automatische Kontakthaltung über das Fahrerassistenzsystem wird erhöht.

In einer vorteilhaften Ausführungsart des erfindungsgemäßen Fahrzeugs sind die Wegsensoren zur berührungslosen Messung der Einfederwege der Federelemente ausgebildet. Durch den Einsatz eines berührungslosen Wegsensors, beispielsweise eines kapazitiv oder induktiv messenden Sensors, insbesondere eines sogenannte OCD-Sensors, wird eine Beeinflussung des Messwertes durch das Messsystem vermieden und eine elektrische Isolation zwischen Schleifleiste und dem restlichen Stromabnehmer möglich.

In einer weiteren vorteilhaften Ausführungsart des erfindungsgemäßen Fahrzeugs ist die Auswertungseinheit dazu ausgebildet, die Seitenlage des Kontaktpunkts aus der Differenz zwischen dem Quotienten aus den beiden die Einfederwege repräsentierenden Sensorsignalen und dem Kehrwert dieses Quotienten zu ermitteln. Da insbesondere berührungslose Sensoren einen nichtlinearen Zusammenhang zwischen dem gemessenen Einfederweg und dem ausgegebenen Sensorsignal aufweisen, wird hier ein Verfahren zur Verarbeitung der Sensorsignale vorgeschlagen, das ein für die Seitenlage des Kontaktpunktes repräsentativ Ergebnis liefert und dabei eine geringere Nichtlinearität, insbesondere verglichen mit herkömmlichen Differenzverfahren, aufweist.

In einer weiteren vorteilhaften Ausführungsart des erfindungsgemäßen Fahrzeugs ist das Fahrerassistenzsystem dazu eingerichtet, den automatischen Lenkeingriff derart auszuführen, dass der Kontaktpunkt des Fahrdrahtes auf der Schleifleiste innerhalb eines vorgegebenen Arbeitsbereichs der Schleifleiste gehalten wird. So kann das Fahrerassistenzsystem einen gegenlenkenden Lenkeingriff durchführen, wenn der Kontaktpunkt des Fahrdrahtes um einen voreingestellten Abstand von der Mitte der Schleifleiste erreicht, wobei der Abstand kleiner als die Hälfte des Arbeitsbereiches der Schleifleiste ist, damit noch Spiel für ein Überschreiten des Abstandes besteht, das durch die verzögerte Wirkung des Lenkeingriffs benötigt wird. Effektiv bedeutet dies, dass das Fahrerassistenzsystem das Fahrzeug innerhalb eines Fahrkorridors der elektrifizierten Fahrspur lenkt, so dass der Kontaktpunkt des Fahrdrahtes den Arbeitsbereich der Schleifleiste nicht verlässt. So könnte der Kontaktpunkt des Fahrdrahts möglichst in der Mitte der Schleifleiste gehalten werden.

In einer weiteren vorteilhaften Ausführungsart des erfindungsgemäßen Fahrzeugs ist das Fahrerassistenzsystem dazu eingerichtet, den automatischen Lenkeingriff derart auszuführen, dass der Arbeitsbereich der Schleifleiste gleichmäßig ausgenutzt wird. Hierdurch wird ein gleichmäßiger Verschleiß über den gesamten Arbeitsbereich der Schleifleiste und damit eine Erhöhung der Standzeit bis zu einem erforderlichen Schleifleistenwechsel erreicht. Außerdem werden durch die Lenkbewegungen starken Spurrillenbildung in der Fahrspur vermieden, indem ein breiter Fahrkorridor innerhalb der elektrifizierten Fahrspur genutzt wird.

In einer weiteren vorteilhaften Ausführungsart des erfindungsgemäßen Fahrzeugs ist die Auswertungseinheit dazu ausgebildet, aus der Summe der beiden die Einfederwege repräsentierenden Sensorsignale eine Kontaktkraft zwischen der Schleifleiste und dem Fahrdraht zu ermitteln. Die Erfassungseinrichtung kann zusätzlich zur Ermittlung der aktuellen Kontaktkraft verwendet werden, wodurch eine gesonderte Messvorrichtung hierfür vermieden wird. Aus der Summe der an den Federelementen wirkenden Federkräfte ergibt sich die aktuell ausgeübte Kontaktkraft durch die Schleifleiste auf den Fahrdraht.

In einer weiteren vorteilhaften Ausführungsart des erfindungsgemäßen Fahrzeugs weist der Stromabnehmer eine Steuereinheit zur Aktivierung und Deaktivierung einer Druckbeaufschlagung des Hubantriebs auf. Dabei ist die Steuereinheit mit der Auswertungseinheit verbunden und derart eingerichtet, dass der Hubantrieb zur Regelung der Kontaktkraft zwischen Schleifleiste und Fahrdraht in Abhängigkeit der ermittelten Kontaktkraft angesteuert wird. Durch diese Regelung kann in unterschiedlichen Fahrdrahthöhen und bei auftretenden Fahrzeugschwingungen eine Kontaktkraft aufrechterhalten werden, die möglichst gering in Hinblick auf den Verschleiß der Schleifleiste, aber groß genug für eine sichere Energieübertragung ist.

In einer weiteren vorteilhaften Ausführungsart des erfindungsgemäßen Fahrzeugs ist die Steuereinheit derart eingerichtet, dass der Hubantrieb deaktiviert wird, wenn oberhalb einer vorgebbaren Aufstellhöhe der Kontaktwippe kein Einfederweg der Federelemente gemessen wird. Stellt die Steuereinheit fest, dass ab einer erwarteten Fahrdrahthöhe kein Einfedern der Schleifleiste erfolgt, wird eine Absenkung des Stromabnehmers ausgelöst, da ein Fahrdraht an der Fahrzeugposition offenbar nicht oder nicht mehr vorhanden ist.

In einer weiteren vorteilhaften Ausführungsart des erfindungsgemäßen Fahrzeugs ist die Steuereinheit derart eingerichtet, dass der Hubantrieb deaktiviert wird, wenn die gemessene Seitenlage des Kontaktpunktes randseitige Grenzpositionen des Arbeitsbereichs der Schleifleiste erreicht oder überschreitet. Ebenso wird der Stromabnehmer aus Sicherheitsgründen abgesenkt, wenn das Fahrzeug beispielsweise bei einem Ausweich- oder Überholmanöver die elektrifizierte Fahrspur verlassen muss und dabei der Fahrdraht seitlich aus dem Arbeitsbereich der Schleifleiste zu geraten droht.

Weitere Eigenschaften und Vorteile des erfindungsgemäßen Fahrzeugs ergeben sich aus den nachfolgend näher beschriebenen Zeichnungen, in deren
- FIG 1: ein erfindungsgemäßes Fahrzeug mit einem Stromabnehmer in Seitenansicht und
- FIG 2: ein Teilausschnitt einer Kontaktwippe des Stromabnehmers aus FIG 1 in Frontalansicht
schematisch veranschaulicht sind.

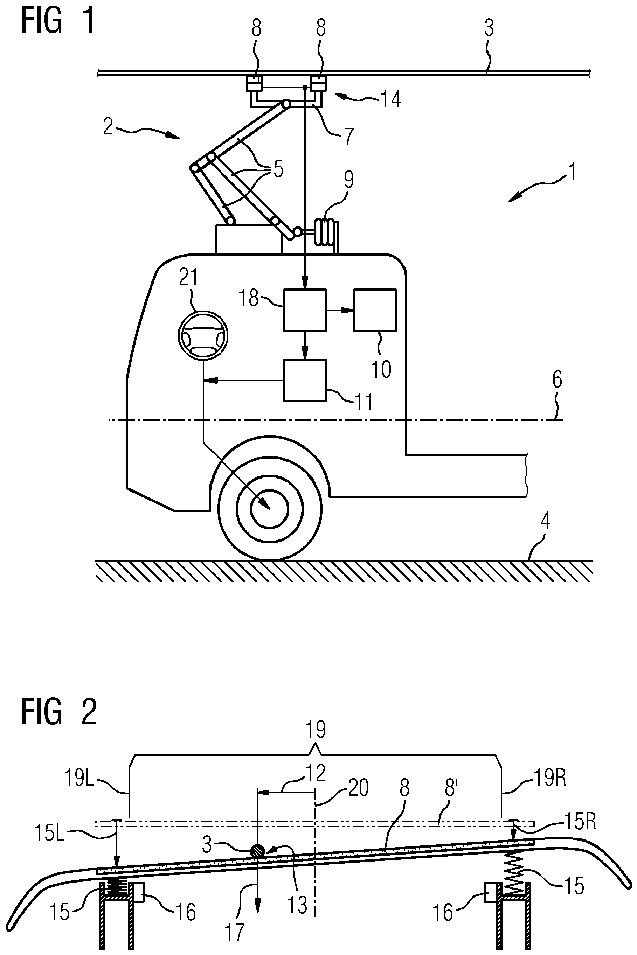

Gemäß FIG 1 umfasst ein nicht spurgebundenes, elektrisch angetriebenes Fahrzeug 1, das als Zugmaschine eines Sattelzuges ausgebildet sein kann, einen Stromabnehmer 2 zur Einspeisung von elektrischer Energie aus einer zweipoligen Oberleitungsanlage. Die Oberleitungsanlage umfasst zwei als Hin- und Rückleiter ausgebildete Fahrdrähte 3, die parallel über einer elektrifizierten Fahrspur 4 einer Fahrbahn gespannt sind. Der Stromabnehmer 2 weist ein gelenkiges Traggestänge 5 auf, welches fahrdrahtseitig zwei bezüglich einer Fahrzeuglängsachse 6 nebeneinander angeordnete Kontaktwippen 7 trägt. Jede Kontaktwippe 7 weist zwei längliche, bezüglich der Fahrzeuglängsachse 6 hintereinander angeordnete Schleifleisten 8 auf, die zur Herstellung eines elektrischen Schleifkontakts mit den Fahrdrähten 3 vorgesehen sind. Fahrzeugseitig ist das Traggestänge 5 mit einem Hubantrieb 9 zum Aufstellen des Traggestänges 5 und zum Andrücken der Kontaktwippen 7 an die Fahrdrähte 3 der Oberleitungsanlage gekoppelt. Der Stromabnehmer 2 weist eine Steuereinheit 10 zur Aktivierung und Deaktivierung einer Druckbeaufschlagung des Hubantriebs 9 auf, wodurch das Traggestänge 5 aufgestellt und zusammengelegt und dadurch die Kontaktwippen 7 zwischen einer unteren Ruheposition und einer oberen Kontaktposition anheb- und absenkbar sind. Das Fahrzeug 1 umfasst ferner ein Fahrerassistenzsystem 11 zur Ausführung eines automatischen Lenkeingriffs, das als Spurhalteassistent mit entsprechender Erkennungssensorik für eine Fahrspurmarkierung ausgebildet sein kann.

Zur Erfassung einer Seitenlage 12 eines Kontaktpunktes 13 des Fahrdrahtes 3 auf einer Schleifleiste 8, beispielsweise gemessen von einer Schleifleistenmitte 20, umfasst das Fahrzeug 1 unter weiterer Bezugnahme auf FIG 2 eine Erfassungseinrichtung 14. Dazu sind die Schleifleisten 8 jeweils über zwei beispielsweise als Blattfedern ausgebildete Federelemente 15 an der Kontaktwippe 7 abgestützt. Die Erfassungseinrichtung 14 weist zwei berührungslos arbeitende Wegsensoren 16 zur Messung von Einfederwegen 15L und 15R der Federelemente 15 auf. Die Einfederwege 15L und 15R sind in FIG 2 erkennbar, da die Schleifleiste 8' auch in einer Neutralstellung abgebildet ist, in der sie nicht in Kontakt mit einem Fahrdraht 3 steht. Die Einfederwege 15L und 15R sind durch die Federkonstanten der Federelemente 15, durch die Seitenlage 12 des Kontaktpunktes 13 und durch die im Kontaktpunkt 13 wirkende Kontaktkraft 17 zwischen Fahrdraht 3 und Schleifleiste 8 gegeben. Die Erfassungseinrichtung 14 weist auch eine Auswertungseinheit 18 auf, die per Funk oder leitungsgebunden mit den Wegsensoren 16 verbunden ist und die Seitenlage 12 des Kontaktpunktes 13 aus Sensorsignalen, welche die gemessenen Einfederwege 15L und 15R repräsentieren, ermittelt. Das Fahrerassistenzsystem 11 führt den automatischen Lenkeingriff in Anhängigkeit von der erfassten Seitenlage 12 des Kontaktpunktes 13 aus, um eine fortwährende Kontakthaltung des Stromabnehmers 2 zur Oberleitungsanlage zur Verfügung zu stellen.

Um negative Effekte aufgrund von Nichtlinearitäten in den Sensorsignalen der kapazitiv oder induktiv arbeitenden Wegsensoren 16 gering zu halten, ist die Auswertungseinheit 18 dazu ausgebildet, die Seitenlage 12 des Kontaktpunkts 13 aus der Differenz zwischen dem Quotienten aus den beiden die Einfederwege 15L und 15R repräsentierenden Sensorsignalen und dem Kehrwert dieses Quotienten zu ermitteln.

Das Fahrerassistenzsystem 11 ist dazu eingerichtet, den automatischen Lenkeingriff derart auszuführen, dass der Kontaktpunkt 13 des Fahrdrahtes 3 auf der Schleifleiste 8 innerhalb eines vorgegebenen Arbeitsbereichs 19 der Schleifleisten 8 gehalten wird, vorzugsweise derart, dass der Arbeitsbereich 19 der Schleifleisten 8 gleichmäßig ausgenutzt wird. Hierdurch wird die Abnutzung der Schleifleisten 8 über deren gesamten Arbeitsbereich 19 verteilt, so dass diese weniger schnell verschleißen und ersetzt werden müssen. Außerdem wird das Ausbilden von Spurrillen in der Fahrspur 4 vermindert, wenn das Fahrerassistenzsystem 11 nicht permanent das Fahrzeug 1 in der Spurmitte hält, sondern einen gewissen Fahrkorridor innerhalb der elektrifizierten Fahrspur 4 ausnutzt.

Die Auswertungseinheit 18 ist zudem dazu ausgebildet, aus der Summe der beiden die Einfederwege 15L und 15R repräsentierenden Sensorsignale die Kontaktkraft 17 zwischen den Schleifleisten 8 und den Fahrdrähten 3 zu ermitteln. Diese ergibt sich als Summe der die Einfederwege 15L und 15R bewirkenden Teilkontaktkräfte an den Federelementen 15 mit bekannter Federkonstante. Die Steuereinheit 10 ist mit der Auswertungseinheit 18 verbunden und derart eingerichtet, dass der Hubantrieb 9 zur Regelung der Kontaktkraft 17 zwischen Schleifleisten 8 und Fahrdrähten 3 in Abhängigkeit der ermittelten Kontaktkraft 17 angesteuert wird. Auf diese Weise ist für die Bestimmung der Kontaktraft 17 keine weitere Messvorrichtung erforderlich und sie kann in einem gewünschten Kraftbereich geregelt werden.

Die Steuereinheit 10 ist auch derart eingerichtet, dass der Hubantrieb 9 deaktiviert wird, wenn oberhalb einer vorgebbaren Aufstellhöhe der Kontaktwippen 7 kein Einfederweg 15L und 15R der Federelemente 15 gemessen wird. Damit erfolgt ein Absenken des Stromabnehmers 2, wenn oberhalb des Fahrzeugs 1 kein Fahrdraht 3 vorhanden ist. Der Hubantrieb 9 kann auch deaktiviert werden, wenn die gemessene Seitenlage 12 des Kontaktpunktes 13 randseitige Grenzpositionen 19L oder 19R des Arbeitsbereichs 19 der Schleifleiste 8 erreicht oder überschreitet. Erfordert ein manueller Lenkeingriff über das Lenkrad 21 ein Verlassen des durch das Fahrerassistenzsystem 11 befahrenen Fahrkorridors, etwa bei Überhol- oder Ausweichmanövern, so wird der Stromabnehmer 2 abgesenkt, wenn der Kontaktpunkt 13 eine der Grenzpositionen 19L oder 19R erreicht, damit der Stromabnehmer 2 automatisch eine sichere Betriebsposition einnimmt.

## Patentansprüche

1. Nicht spurgebundenes, elektrisch angetriebenes Fahrzeug (1) umfassend
- einen Stromabnehmer (2) zur Einspeisung von elektrischer Energie aus einer zweipoligen Oberleitungsanlage, der ein gelenkiges Traggestänge (5) aufweist, dass fahrdrahtseitig eine Kontaktwippe (7) mit einer Schleifleiste (8) trägt und das fahrzeugseitig mit einem Hubantrieb (9) zum Aufstellen des Traggestänges (5) und zum Andrücken der Kontaktwippe (7) an einen Fahrdraht (3) der Oberleitungsanlage gekoppelt ist,
- eine Erfassungseinrichtung (14) zur Erfassung einer Seitenlage (12) eines Kontaktpunktes (13) des Fahrdrahtes (3) auf der Schleifleiste (8) und
- ein Fahrerassistenzsystem (11) zur Ausführung eines automatischen Lenkeingriffs in Anhängigkeit von der erfassten Seitenlage (12) des Kontaktpunktes (13),
**dadurch gekennzeichnet,**
- **dass** die Schleifleiste (8) über mindestens zwei Federelemente (15) an der Kontaktwippe (7) abgestützt ist, und
- **dass** die Erfassungseinrichtung (14) zwei Wegsensoren (16) zur Messung von Einfederwegen (15L, 15R) der Federelemente (15) und eine mit den Wegsensoren (16) verbundene Auswertungseinheit (18) zur Ermittlung der Seitenlage (12) des Kontaktpunktes (13) aus den gemessene Einfederwege (15L, 15R) repräsentierenden Sensorsignalen aufweist.

2. Fahrzeug (1) nach dem vorstehenden Anspruch, wobei die Wegsensoren (16) zur berührungslosen Messung der Einfederwege (15L, 15R) der Federelemente (15) ausgebildet sind.

3. Fahrzeug (1) nach einem der vorstehenden Ansprüche, wobei die Auswertungseinheit (18) dazu ausgebildet ist, die Seitenlage (12) des Kontaktpunkts (13) aus der Differenz zwischen dem Quotienten aus den beiden die Einfederwege (15L, 15R) repräsentierenden Sensorsignalen und dem Kehrwert dieses Quotienten zu ermitteln.

4. Fahrzeug (1) nach einem der vorstehenden Ansprüche, wobei das Fahrerassistenzsystem (11) dazu eingerichtet ist, den automatischen Lenkeingriff derart auszuführen, dass der Kontaktpunkt (13) des Fahrdrahtes (3) auf der Schleifleiste (8) innerhalb eines vorgegebenen Arbeitsbereichs (19) der Schleifleiste (8) gehalten wird.

5. Fahrzeug (1) nach Anspruch 4, wobei das Fahrerassistenzsystem (11) dazu eingerichtet ist, den automatischen Lenkeingriff derart auszuführen, dass der Arbeitsbereich (19) der Schleifleiste (8) gleichmäßig ausgenutzt wird.

6. Fahrzeug (1) nach einem der vorstehenden Ansprüche, wobei die Auswertungseinheit (18) dazu ausgebildet ist, aus der Summe der beiden die Einfederwege (15L, 15R) repräsentierenden Sensorsignale eine Kontaktkraft (17) zwischen der Schleifleiste (8) und dem Fahrdraht (3) zu ermitteln.

7. Fahrzeug (1) nach dem vorstehenden Anspruch, wobei der Stromabnehmer (2) eine Steuereinheit (10) zur Aktivierung und Deaktivierung einer Druckbeaufschlagung des Hubantriebs (9) aufweist, wobei die Steuereinheit (10) mit der Auswertungseinheit (18) verbunden und derart eingerichtet ist, dass der Hubantrieb (9) zur Regelung der Kontaktkraft (17) zwischen Schleifleiste (8) und Fahrdraht (3) in Abhängigkeit der ermittelten Kontaktkraft (17) angesteuert wird.

8. Fahrzeug (1) nach dem vorstehenden Anspruch, wobei die Steuereinheit (10) derart eingerichtet ist, dass der Hubantrieb (9) deaktiviert wird, wenn oberhalb einer vorgebbaren Aufstellhöhe der Kontaktwippe (7) kein Einfederweg (15L, 15R) der Federelemente (15) gemessen wird.

9. Fahrzeug (1) nach einem der Ansprüche 6 bis 8, wobei die Steuereinheit (10) derart eingerichtet ist, dass der Hubantrieb (9) deaktiviert wird, wenn die gemessene Seitenlage (12) des Kontaktpunktes (13) randseitige Grenzpositionen (19L, 19R) des Arbeitsbereichs (19) der Schleifleiste (8) erreicht oder überschreitet.

## Claims

1. Non-track-bound, electrically driven vehicle (1) comprising
- a current collector (2) for feeding electrical energy from a two-pole overhead line, which has an articulated support linkage (5) which supports a contact rocker (7) with a contact strip (8) on the contact wire side and which on the vehicle side is coupled to a lift drive (9) for setting up the support linkage (5) and for pressing the contact rocker (7) onto a contact wire (3) of the overhead line system,
- a recording facility (14) for recording a lateral position (12) of a contact point (13) of the contact wire (3) on the contact strip (8) and
- a driver assistance system (11) for executing an automatic steering intervention as a function of the recorded lateral position (12) of the contact point (13),
**characterised in that**
- the contact strip (8) is braced against the contact rocker (7) via at least two spring elements (15), and
- the recording facility (14) has two path sensors (16) for measuring compression paths (15L, 15R) of the spring elements (15) and an evaluation unit (18) connected to the path sensors (16) for ascertaining the lateral position (12) of the contact point (13) from sensor signals representing the measured compression paths (15L, 15R).

2. Vehicle (1) according to the preceding claim, wherein the path sensors (16) are embodied for measuring the compression paths (15L, 15R) of the spring elements (15) in a contactless manner.

3. Vehicle (1) according to one of the preceding claims, wherein the evaluation unit (18) is embodied to ascertain the lateral position (12) of the contact point (13) from the difference between the quotient derived from the two sensor signals representing the compression paths (15L, 15R) and the reciprocal value of said quotient.

4. Vehicle (1) according to one of the preceding claims, wherein the driver assistance system (11) is configured to execute the automatic steering intervention in such a manner that the contact point (13) of the contact wire (3) on the contact strip (8) is kept within a predefined operating region (19) of the contact strip (8).

5. Vehicle (1) according to claim 4, wherein the driver assistance system (11) is configured to execute the automatic steering intervention in such a manner that the operating region (19) of the contact slip (8) is evenly utilised.

6. Vehicle (1) according to one of the preceding claims, wherein the evaluation unit (18) is embodied to ascertain a contact force (17) between the contact strip (8) and the contact wire (3) from the sum of the two sensor signals that represent the compression paths (15L, 15R).

7. Vehicle (1) according to the preceding claim, wherein the current collector (2) has a control unit (10) for activating and deactivating a pressure application of the lift drive (9), wherein the control unit (10) is connected to the evaluation unit (18) and is configured in such a manner that the lift drive (9) is actuated to regulate the contact force (17) between contact strip (8) and contact wire (3) as a function of the ascertained contact force (17).

8. Vehicle (1) according to the preceding claim, wherein the control unit (10) is configured in such a manner that the lift drive (9) is deactivated if no compression path (15L, 15R) of the spring elements (15) is measured above a predefinable setup height of the contact rocker (7).

9. Vehicle (1) according to one of claims 6 to 8, wherein the control unit (10) is configured in such a way that the lift drive (9) is deactivated when the measured lateral position (12) of the contact point (13) reaches or exceeds edge-side limit positions (19L, 19R) of the operating region (19) of the contact strip (8).

## Revendications

1. Véhicule (1) à entraînement électrique non guidé sur rail, comprenant
- un appareil (2) de prise de courant pour l'injection d'énergie électrique, à partir d'une installation de ligne de contact bipolaire, qui a une tringlerie (5) de support articulée, qui porte, du côté du fil de contact, un archet (7) de contact ayant un frotteur (8), et qui est reliée, du côté du véhicule, à un entraînement (9) de levage pour faire s'élever la tringlerie (5) de support et pour presser l'archet (7) de contact sur un fil (3) de contact de l'installation de ligne de contact,
- un dispositif (14) de détection d'une position (12) latérale d'un point (13) de contact du fil (3) de contact sur le frotteur (8) et
- un système (11) d'assistance au conducteur pour la réalisation d'une intervention automatique de conduite, en fonction de la position (12) latérale du point (13) de contact,
**caractérisé**
- **en ce que** le frotteur (8) est appuyé sur l'archet (7) de contact, par l'intermédiaire d'au moins deux éléments (15) de ressort, et
- **en ce que** le dispositif (14) de détection a deux capteurs (16) de course pour la mesure de courses (15L, 15R) de compression des éléments (15) de ressort et une unité (18) d'analyse, reliée aux capteurs (16) de course, pour la détermination de la position (12) latérale du point (13) de contact à partir des signaux de capteurs représentant les courses (15L, 15R) de compression de ressort mesurées.

2. Véhicule (1) suivant la revendication précédente, dans lequel les capteurs (16) de course sont constitués pour la mesure sans contact des courses (15L, 15R) de compression des éléments (15) de ressort.

3. Véhicule (1) suivant l'une des revendications précédentes, dans lequel l'unité (18) d'analyse est constituée pour déterminer la position (12) latérale du point (13) de contact, à partir de la différence entre le quotient des deux signaux de capteurs représentant les courses (15L, 15R) de compression de ressort et l'inverse de ce quotient.

4. Véhicule (1) suivant l'une des revendications précédentes, dans lequel le système (11) d'assistance au conducteur est conçu pour effectuer l'intervention automatique de conduite, de manière à maintenir le point (13) de contact du fil (3) de contact sur le frotteur (8) dans une partie (19) de travail donnée à l'avance du frotteur (8).

5. Véhicule (1) suivant la revendication 4, dans lequel le système (11) d'assistance au conducteur est conçue pour effectuer l'intervention automatique de conduite, de manière à tirer parti uniformément de la partie (19) de travail du frotteur (8).

6. Véhicule (1) suivant l'une des revendications précédentes, dans lequel l'unité (18) d'analyse est constituée pour déterminer, à partir de la somme des deux signaux de capteurs représentant les courses (15L, 15R) de compression de ressort, une force (17) de contact entre le frotteur (8) et le fil (3) de contact.

7. Véhicule (1) suivant la revendication précédente, dans lequel l'appareil (2) de prise de courant a une unité (10) de commande pour l'activation et la désactivation de l'alimentation en pression de l'entraînement (9) de levage, dans lequel l'unité (10) de commande est reliée à l'unité (18) d'analyse et est conçue, de manière à ce que l'entraînement (9) de levage soit, pour la régulation de la force (17) de contact entre le frotteur (8) et le fil (3) de commande, commandé en fonction de la force (17) de contact déterminée.

8. Véhicule (1) suivant la revendication précédente, dans lequel l'unité (10) de commande est conçue de manière à désactiver l'entraînement (9) de levage, si l'on ne mesure pas de course (15L, 15R) de compression des éléments (15) de ressort au-dessus d'un niveau de montage pouvant être donné à l'avance de l'archet (7) .

9. Véhicule (1) suivant l'une des revendications 6 à 8, dans lequel l'unité (10) de commande est conçue de manière à désactiver l'entraînement (9) de levage, si la position (12) latérale mesurée du point (13) de contact atteint ou dépasse les positions (19L, 19R) limites, du côté du bord de la partie (19) de travail du frotteur (8).
